# EUROPEAN PATENT SPECIFICATION

(11) **EP 4 425 095 B1**
(45) Date of publication and mention of the grant of the patent: **04.11.2026**
(21) Application number: 24160109.5
(22) Date of filing: 27.02.2024
(51) Int. Cl.: G01B 9/02, G01B 11/24, G01M 11/00, G01M 11/02

(54) **AN OPTICAL METROLOGY SYSTEM AND METHODS FOR THE MEASUREMENT OF OPTICAL SURFACES**
OPTISCHES METROLOGIESYSTEM UND VERFAHREN ZUR MESSUNG OPTISCHER OBERFLÄCHEN
SYSTÈME DE MÉTROLOGIE OPTIQUE ET PROCÉDÉS DE MESURE DE SURFACES OPTIQUES

(30) Priority: 28.02.2023 GB 202302951
(43) Date of publication of application: 04.09.2024
(73) Proprietor: MBRYONICS Ltd, Bóthar le Chéile, Westside H91 XK22 Galway (IE)
(72) Inventor: Fitzgerald, Niamh, Galway, H91 XK22 (IE); Mackey, Ruth, Galway, H91 XK22 (IE); Daly, Liz, Galway, H91 XK22 (IE); Mackey, David, Galway, H91 XK22 (IE); Martin, Louis, Galway, H91 XK22 (IE); Goncharov, Alexander V, Co. Galway, H91TVH3 (IE)
(74) Representative: Murgitroyd & Company

(56) References cited:
- CN-A- 101 013 027
- US-A1- 2012 236 316
- US-A1- 2014 132 960
- US-A1- 2021 278 201
- KREDBA JAN ET AL: "Positioning system and lattice design for subaperture stitching interferometry", PROCEEDINGS OF SPIE; [PROCEEDINGS OF SPIE ISSN 0277-786X VOLUME 10524], SPIE, US, vol. 10151, 11 November 2016 (2016-11-11), pages 101510G - 101510G, XP060080747, ISBN: 978-1-5106-1533-5, DOI: 10.1117/12.2257310

## Description

### Field

The present specification relates to a partially nulling optical metrology system, and a method for the measurement of freeform optical surfaces.

### Background

Optical surface metrology is the bottleneck of the freeform optical surface manufacturing process chain. The manufacturing workflow steps iterate between machining the surface and measuring the surface error to converge towards the target surface shape. In some current arrangements optical surface manufacturing processes require the optic to be removed from the vacuum chuck for measurement of the surface error. That is, the optical surface is measured off-machine in a separate metrology unit and is then re-mounted and re-aligned on the vacuum chuck for further machining pending the outcome of the surface measurement. This process is time consuming and a source of alignment errors, which limits the possibility of mass manufacturing of freeform optical surfaces.

Therefore, there is a need to provide a system that overcomes the drawbacks of existing solutions.

Reference is made to the documents US 2012/236316 A1 and US 2021/278201 AI which have been cited as exemplary of the state of the art. US 2012/236316 A1 provides an apparatus comprising a Fizeau plate, adaption optics and an angle of incidence varying device at a fixed cavity unit. US 2021/278201 A1 provides a stitching-measurement device adapted for performing stitching-measurement on a surface of a concave spherical lens.

### Summary

The specification provides exemplary arrangements directed to addressing the problems noted above associated with the previous arrangements. The specification and claims are directed to providing an improved and alternative approach for the measurement of optical surfaces including freeform optical surfaces.

The scope of the invention is in accordance with the appended claims.

An optical metrology system according to arrangements of the specification is provided. According to embodiments of the invention individually partially nulled subapertures, SA, are stitched to retrieve the total surface error of the surface under test, SUT.

The exemplary arrangements of the specification advantageously provide partial nulling through a novel and inventive configuration of the SUT and the metrology system. Advantageously there is provided a flexible configuration, which comprises mounting the SUT and using a positioning mechanism to position the SA for measurement. In one embodiment the SUT is positioned on a rotational spindle and the positioning mechanism comprises a relay and tip/tilt mirror in the metrology machine to precisely position the SA for measurement. In the exemplary methods presented here, the manufacturing and measuring processes are decoupled. This advantageously removes any inherent metrology bias that may exist in other prior measuring systems, such as confocal ones. The exemplary methods of embodiments of the specification provides partial nulling which requires six degrees of freedom. In embodiments of the specification, a digital twin of the entire system is created using optical design software prior to commencing measurements. The digital twin is configured for use to solve for the most efficient machine path for the required SA overlap. Further the partial nulling requirements for the hardware are pre-calculated, modelled, and tested for every SA prior to recording of any SA data.

Advantageously, there is provided an optical metrology system for measuring the wavefront error (namely departure of the manufactured optic shape from its design shape) of large, non-standard optical surfaces. According to embodiments of the specification the measured surface information from individual SAs, each smaller than the full SUT size, are stitched together to reconstruct the full surface. Non-standard optics may have regions that are very steep, resulting in highly-packed interference fringes when examined with a conventional interferometer. These dense fringes may completely bury the more subtle fine structure of the optic, saturating the measuring range of the instrument in the process. According to embodiments of the specification there is provided a method to partially null these fringes, wherein the partial nulling comprises reducing their number and increasing their spacing, making measurement of the underlying surface profile possible. Partial nulling is achieved through configuration of the SUT and the metrology machine itself. In one embodiment, the SUT is mounted on a rotational spindle, which is mechanically separate from the metrology system. The metrology system which includes a reconfigurable relay mirror and a reconfigurable tip/tilt mirror, the relay mirror having six degrees of freedom motion. These reconfigurable mirrors (relay and tip/tilt) are positioned such that the fringes from the particular SA under consideration are partially nulled.

Thus, the manufacturing and measuring processes according to embodiments of the specification, are completely decoupled, removing the metrology bias that exists in other systems, such as confocal ones. In addition, in the arrangements of the specification variable optical elements to further null the fringes at each SA position, maximising the available measurement range for that particular measurement.

In exemplary embodiments, a digital twin of the full system is used to plan the SA lattice layout using a custom software routine, model the nulling required and achievable at each location, and simulate the machine output at that location. Lattice design can be iterated upon to achieve the accuracy required if necessary. The arrangements of the specification provide that all of this planning can be done prior to taking any actual data measurements. The methods further provides that when the measurements have been taken, stitching of SAs is performed, to recreate the SUT over its full diameter. The stitching is performed using software. The software is optimised for speed, through code design and use of parallel processing, when stitching SA obtained with high-resolution cameras. The arrangement advantageously is configured to provide that the computation time required to recreate a large diameter SUT from many SA measurements does not become impractical. The system is advantageously configured to be compact to allow for integration into a single point diamond turning, SPDT, polishing machine. Thus, arrangements of the specification support an integrated or inline system making inline measurements possible.

The methodology described advantageously partially nulls many individual sub-aperture measurements across the surface under test (SUT). The position of the SUT on a rotational spindle, and the placement of a relay and a tip/tilt mirror, the relay mirror having six degrees of freedom motion, works to achieve partial nulling for each SA. Lattice design is employed to optimise the machine measurement path for a given amount of SA overlap. A digital twin of the entire system is used to simulate and test the partial nulling capabilities for each SA in a given lattice design. The SUT shape can then be reconstructed with stitching algorithms to combine the individual measurements. The novel measurement planning and process allows for large aperture optics with challenging surface topographies to be measured.

According to further exemplary arrangements a partial nulling methodology is presented for the measurement of freeform optical surfaces.

According to the invention, there is provided a partially nulling optical metrology system (100) for the measurement of large aperture and freeform optical surfaces, the metrology system comprising: a first mirror (115) having a plurality of degrees of freedom of motion; one or more optical elements comprising reconfigurable optical elements; a controller;
the metrology system (100) configured to be optically coupled to an externally located surface under test, SUT (125), and to capture measurement data from each of a plurality individual subapertures, SAs, across the area of the SUT, each SA having a surface area smaller than that of the SUT; and
the metrology system configured to provide partial nulling of each of the SA measurements across the SUT, based on controlled adjustment of one or more of the metrology system and the elements thereof;
   wherein a position of the metrology system relative to the SUT is adjustable, the metrology system being coupled to a moveable mount and the controller operable to adjust the position of the metrology system;
   wherein the reconfigurable optical elements are adjustable relative to the SUT;
   wherein the first mirror is adjustable relative to the SUT; and
   wherein the measurement data, comprising measurements relating to the plurality of individual subapertures, SAs, is stitched to describe the full surface of the SUT.

The first mirror may comprise a beam steering mirror (115), wherein the beam steering mirror is a reconfigurable tip/tilt mirror.

In one embodiment the system may further comprise a second mirror (120), the second mirror comprising a relay mirror (120) wherein the relay mirror is reconfigurable, having six degrees of freedom of motion.

In one embodiment the first and second mirrors (115, 120) may be adjustable relative to the SUT, and the plurality of SAs, across the SUT, wherein the position of the first and second mirrors (120, 115) is controllable to provide a partial nulling of the individual sub-aperture measurements across the surface under test, SUT.

In one embodiment the position of the metrology system may be adjustable to allow positioning of the metrology system such that measurements are made substantially normal to the SUT, and the plurality of SAs, across the SUT.

In one embodiment the system may be configured to measure wavefront errors of the optical surface of the SUT, by measuring wavefront errors from each of a plurality of individual overlapping subapertures, SAs, of the SUT, each SA having a surface area smaller than that of the SUT, and wherein a reconstruction of the optical surface, is provided by the plurality of partially nulled overlapping subaperture measurements.

In one embodiment, the controller (200) may be configured to control the position of one or more of the: metrology system (100), the first mirror (115), and the second mirror (120), to position an optical beam on the SUT, as required.

In one embodiment, the SUT may be configured according to one or more of the
following:
(i) wherein a position of the SUT is adjustable, the SUT being coupled to a moveable mount, and configured for movement independently of the metrology system such that any mechanical bias of the system is removed from the data collection process; and
(ii) wherein the controller (200) is configured to control the position of the SUT, to allow selection of one or more individual SAs, such that the optical beam is positioned on an SA of the SUT;
(iii) wherein the SUT (125) is mountable to a rotational spindle (126) and wherein the controller (200) is configured to control the position of the SUT, to allow selection of one or more individual SAs, such that the optical beam is positioned on an SA of the SUT.

The system may further comprise an interferometer, wherein the measurement data from each of the subapertures, SAs, comprises phase maps data.

In embodiments according to the specification, the system may further be configured to be integrated into an industrial machining or polishing environment; and the metrology system may be configured to capture measurement data according to one or more of the following:
(i) wherein measurement data comprising subaperture measurements of the SUT is captured in an inline process; and
(ii) wherein measurement data comprising subaperture measurements of the SUT is captured between machining steps during the process of manufacture of the SUT.

In one embodiment, the system may further comprise a lattice design module (310) arranged according to one or more of the following:
(i) wherein the lattice design module is configured to create an optimised lattice configuration (311) wherein the lattice configuration (311) comprises one or more of a definition of a measurement trajectory for a SUT, and a stitching algorithm for stitching of SAs of an SUT;
(ii) wherein the lattice design module (310) is configured to use one or more the following inputs:
   (a) a high-resolution target surface or point cloud of the target surface, and further
      wherein the target surface may be obtained from an optical design software;
   (b) metrology unit constraints, comprising data that is fixed and known for any particular machine;
   (c) metadata relating to the desired outputs including desired resolution, surface dimension properties, and maximum subaperture dimensions.

In one embodiment, a predefined minimum threshold requirement for creation of a lattice design (311) may be defined based on a required fringe resolution criteria for every subaperture, SA and wherein in the event that the required fringe resolution criteria threshold is not met, the lattice configuration requirements are updated, and wherein the lattice configuration requirements may comprise one or more of (i) inter-annulus and (ii) adjacent overlap percentages.

In one embodiment the optical elements are configured to provide partial nulling of individual sub apertures, the optical elements comprising one or more of the following:
(i) at least two cylindrical lenses, wherein the at least two cylindrical lenses are configured to be adjustable and for use in conjunction with one another, and configurable to provide partial nulling of individual subapertures;
(ii) a static phase plate, wherein the static phase plate is configured to rotate about an optical axis to provide partial nulling of individual subapertures.

According to the invention, there is provided a method for the capturing measurement data of the optical surface of a surface under test, SUT, in a partially nulling metrology system as claimed in any of the appended claims, the method comprising:
optically coupling the metrology system to a SUT, wherein the SUT is located externally of the metrology system;
capturing measurement data from each of a plurality individual subapertures, SAs, across the area of the SUT, each SA having a surface area smaller than that of the SUT;
stitching of the measurement data comprising measurements relating to the plurality of individual subapertures, SAs, to describe the full surface of the SUT;
controlling the metrology system and the elements thereof to provide partial nulling of each of the SA measurements across the SUT, wherein said partial nulling is provided based on one or more of the following:
   adjusting the metrology system relative to SUT, wherein the metrology system is mounted to a movable mount for positioning relative to the SUT;
   adjustment of one or more optical elements of the metrology system relative to the SUT;
   adjustment of the one or more mirrors of the metrology system relative to the SUT;
the method further comprising:
adjusting a position of the SUT relative to metrology system as required, the SUT being mountable to a movable mount.

In one embodiment, the method further comprises:
controlling the optical metrology system and the measurement trajectory for the SUT based on operating a lattice design module to create an optimised lattice configuration and to define the measurement trajectory and stitching algorithm for stitching of the SAs in an iterative process.

### Brief description of the drawings

The arrangements of the present application will now be described with reference to the accompanying drawings in which:
Figures 1b and 1b illustrate a system having a central position for alignment and central sub-aperture measurement according to arrangements of the present specification;
Figure 2 illustrates an optic having two superimposed sub-aperture footprints on the surface according to arrangements of the present specification;
Figures 3a and 3b illustrate degrees of freedom of system components for measurement of a freeform optical surface with a convex base shape of a system according to arrangements of the present specification;
Figures 4a and 4b Illustrate degrees of freedom of system components for the measurement of a freeform optical surface with a base shape that departs from convex in a system according to arrangement of the present specification;
Figure 5 illustrates a system layout and process steps therein according to arrangements of the present specification;
Figure 6 illustrates a method for lattice design according to arrangements of the present specification.

### Detailed description of the invention

The present invention will be illustrated using the exemplified embodiments shown in the figures. While this invention has been shown and described with reference to certain illustrated embodiments thereof, it will be understood by those skilled in the art that various changes in form and details may be made therein without departing from the scope of the invention encompassed by the appended claims.

The terminology used herein is for the purpose of describing particular embodiments only and is not intended to be limiting of the embodiments of the invention, which is defined in the appended claims.

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

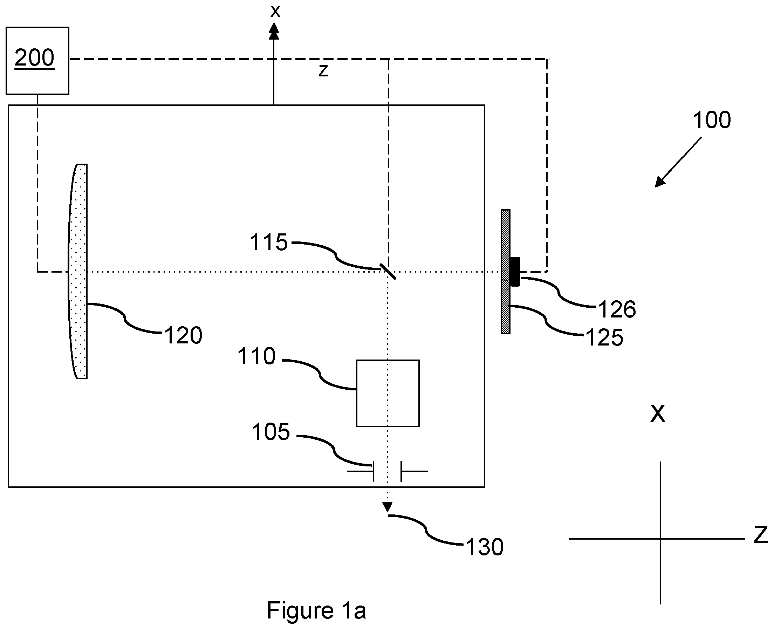

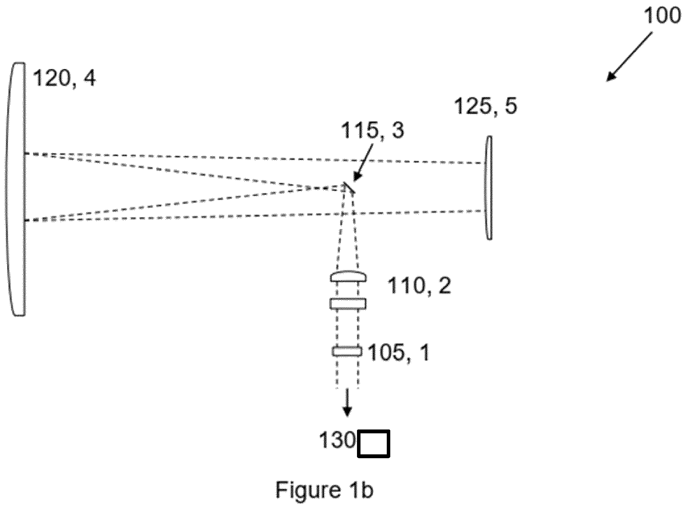

The exemplary arrangements are configured to carry out partial nulling of a freeform SUT, where the measured root mean square (rms) wavefront error can be reconstructed from overlapping sub-aperture measurements across the SUT. Partial nulling is implemented about the exit pupil, labelled as 105, 1 in Figures. The exit pupil is conjugated to the SUT, denoted by 125,5 in Figures 1, for all configurations. The exit pupil is also relayed to the interferometer pupil plane for measurement, denoted by 130, 6 in Figure 1.

The sub-aperture diameter defines the amplitude of the wavefront aberration. That is, the influence of *ρ* in the aberration function W (H, ρ) gives the geometrical wavefront deformation in the exit pupil as a function of the normalised field and aperture vectors denoted by H and ρ respectively: $W \left(\vec{H}, \vec{ρ}\right) = {\sum }_{j , p , m , n} {\left({W}_{k , l , m}\right)}_{j} {\left(\vec{H}⋅\vec{H}\right)}^{p} {\left(\vec{H}⋅\vec{ρ}\right)}^{m} {\left(\vec{ρ}⋅\vec{ρ}\right)}^{{\left.n\vec{0}\right)}^{n}}$ over all surfaces j, where the sub-indices p,m,n represent integers k = 2p + m, I = 2n + m and the coefficients are denoted by W_{k,l,m} and the indices k, l, m in each coefficient describe the algebraic power of the field, pupil and azimuthal angle between the vectors.

Thus, combining multiple subapertures over the SUT for measurement, the largest amplitude aberrations are reduced to predominantly second and fourth order. This reduces the amplitude of aberration required for the nulling component. In the case where thereis a clear dominant aberration such as spherical aberration or astigmatism it can be decoupled from the nulling component and introduced in the focusing elements by amending the surface description to asphere or biconic surfaces.

The sub-aperture can be displaced along the radius of the SUT by manipulating the chief ray angle. Rotation of the SUT about the central mechanical axis, the z-axis, allows the SUT to be completely covered with overlapping sub-aperture footprints.

Retrace error often presents a challenge with the interferometric measurement of optical surfaces. This is addressed in the arrangements of the specification by ensuring that the chief ray is normal to the SUT for each sub-aperture. Modifying the chief ray angle is carried out using a tip-tilt mirror and another mechanical movement. A mechanically shifting and tilting relay mirror is incorporated for the measurement of convex surfaces, labelled as components115, 3 and 120, 4 in Figures 1, respectively.

The present specification relates to an improved system to provide central position for alignment and central sub-aperture measurements. The specification provides exemplary arrangements for improved optical surface manufacturing and measurement. Referring to the exemplary arrangement of Figures 1, 3 and 4, all components of the system are aligned along a central axis, or the z-axis as it is referred to in optical notation. The orientation of the optical system in Figure 1 is that the z-axis is aligned with the central axis of rotational spindle 126, which may comprise a vacuum chuck. The x-axis lies perpendicular to the z-axis along the plane and the y-axis points out of the illustration.

In these exemplary arrangements the central axis may comprise a central machining axis. The optical metrology system 100 may be used in co-operation with a system for machining or manufacture of optical surfaces. In such arrangements the optical surface also referred to as the surface under test is arranged mounted to a rotational spindle and the optical metrology system is optically coupled to the SUT, such that an optical beam of the system 100 is controllably positionable at a location on the surface of the SUT.

A system 100 according to an exemplary arrangement of the present specification is described with reference initially to Figures 1a and 1b, 2 and 3a and 23b. The system 100 is configured to provide a central position for alignment and central sub-aperture measurement is shown in Figure 1.

The system 100 comprises an exit pupil 105, optical elements 110, first mirror 115, second mirror 120, a surface under test 125 and a beam to interferometer pupil 130. The optical elements 110 comprise partial nulling elements 110.

In the arrangement shown, the first mirror is a tip/tilt mirror or a beam steering mirror. The second mirror is a relay mirror. The first and/or second mirrors may be reconfigurable mirrors. A controller 200 is configured to control the positions of the mirrors and the SUT, as described below and shown in the drawings.

The tip-tilt mirror 115 and the relay mirror 120 may be configured for mechanically shifting and tilting for the measurement of convex surfaces.

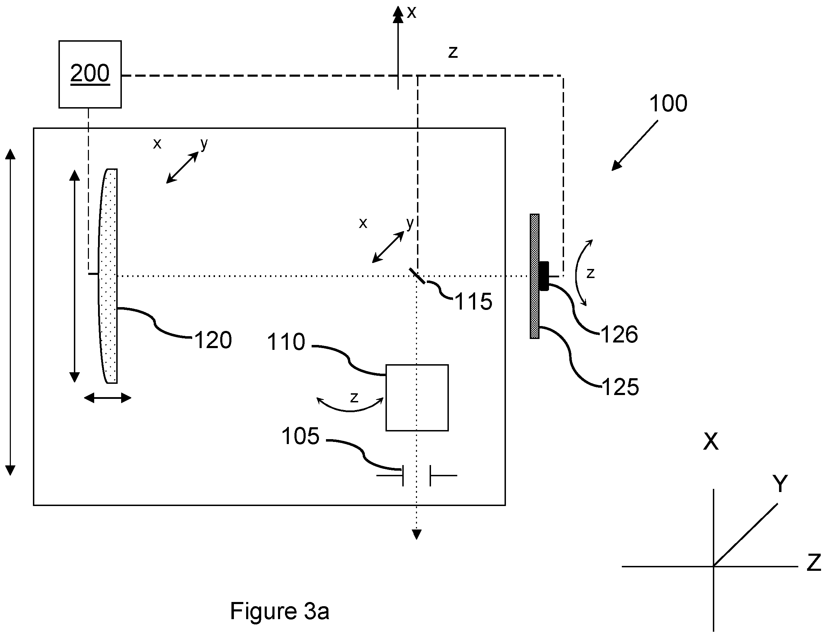

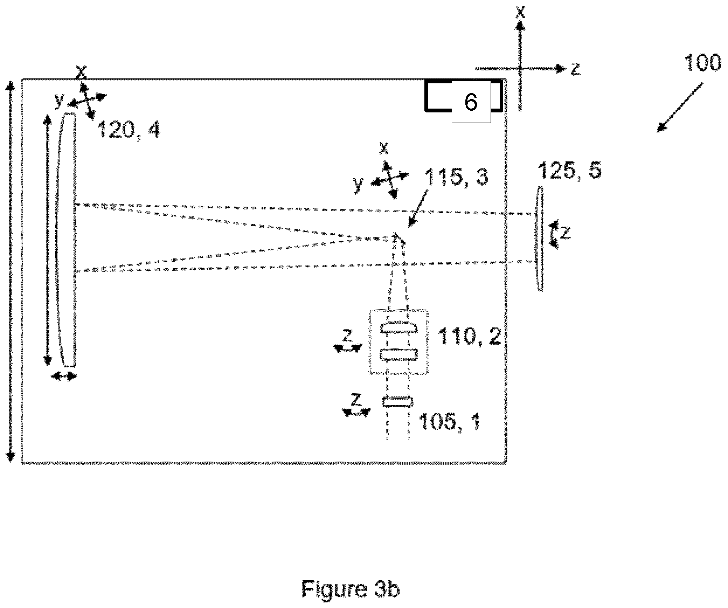

Each of the tip-tilt mirror, 115, and at least one relay mirror, 120, are mechanically configured to provide the following degrees of freedom to enable re-direction of the chief ray:
- Tilt about the x and y axes for the tip-tilt mirror (component 3 in Figure 3b).
- Tilt of the relay mirror (component 4 in Figure 3b) about x and y axes.
- Lateral displacement of the relay mirror (component 4 in Figure 3b) along the x and y axes.
- Lateral displacement of the full metrology system, labelled as 6 in Figure 1b, along the x-axis only, with respect to the SUT (component 5 in Figure 3b).
- Longitudinal displacement of the relay mirror (component 4 in Figure 3) along the z-axis.
- Rotate the SUT about the z-axis, which is the central mechanical axis.

Movements including one or more of the above mechanical movements support position of the SUT/SA and the optical metrology system including one or more of the mirrors 115, 120 as required for the re-direction of the chief ray.

In other arrangements, further additional adjustment or mechanical movements of the components and positioning and relative positioning there can be provided:
- For non-rotationally-symmetric focusing elements, the elements shall rotate about the z-axis.
- For a static nulling element, such as a phase plate, the element shall be rotated about the z-axis.

The elements may be a pair of cylindrical lenses.

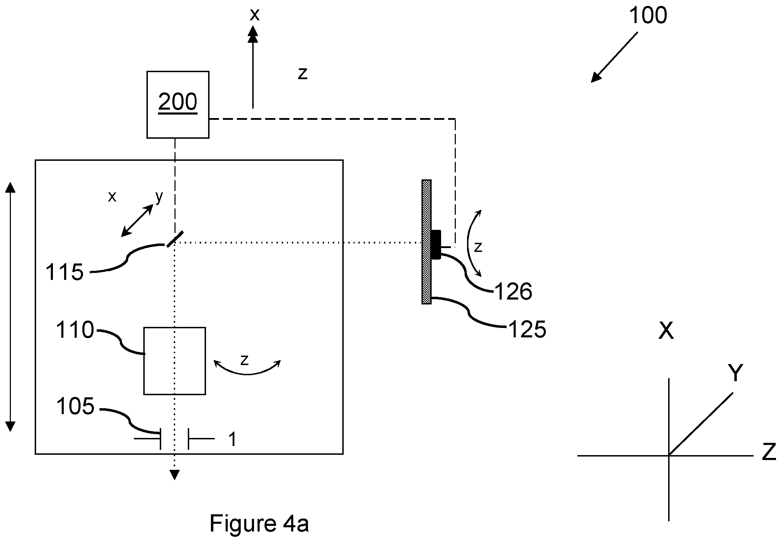

In one exemplary arrangement, provide for measurements of a concave freeform optical surface use of the relay mirror 120 may be omitted. The tip-tilt mirror 115 may be adjusted and positioned as required for example at the centre of curvature of the SUT as per the arrangement shown in Figure 4a.

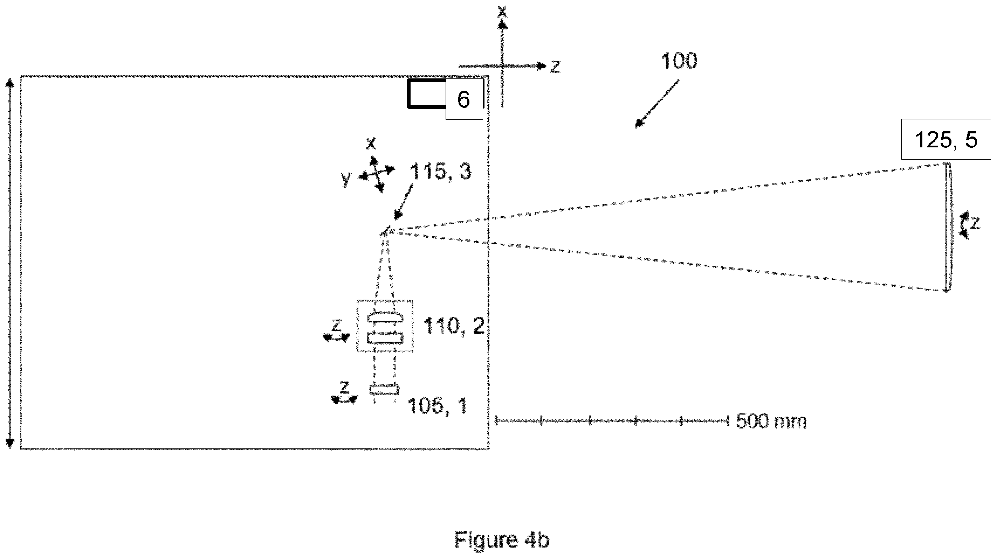

In one exemplary arrangement, mechanical movements for concave optic measurement may be as follows:
- Tilt about the x and y axes for the tip-tilt mirror 115.
- Lateral displacement of the full metrology system, labelled as 6 in Figure 4, along the x-axis only, with respect to the SUT 125 (component 4 in Figure 1 (b)).
- Rotate the SUT 125 about the z-axis, which is the central mechanical axis.

Custom mechanical movements for convex optic measurement may be as follows:
- For non-rotationally-symmetric focusing elements, the elements shall rotate about the z-axis.
- For a static nulling element, such as a phase plate, the element shall be rotated about the z-axis.

In each of Figures 1, 2 and 4, components of the system 100 are aligned along the central machining axis, or the z-axis as it is referred to in optical notation. The system comprises a central sub-aperture 105, an optic 115. The orientation of the optical system in Figure 1 is that the z-axis is aligned with the central axis of chuck 126. Chuck 126 may comprise a vacuum chuck. The x-axis lies perpendicular to the z-axis along the plane and the y-axis points out of the illustration.

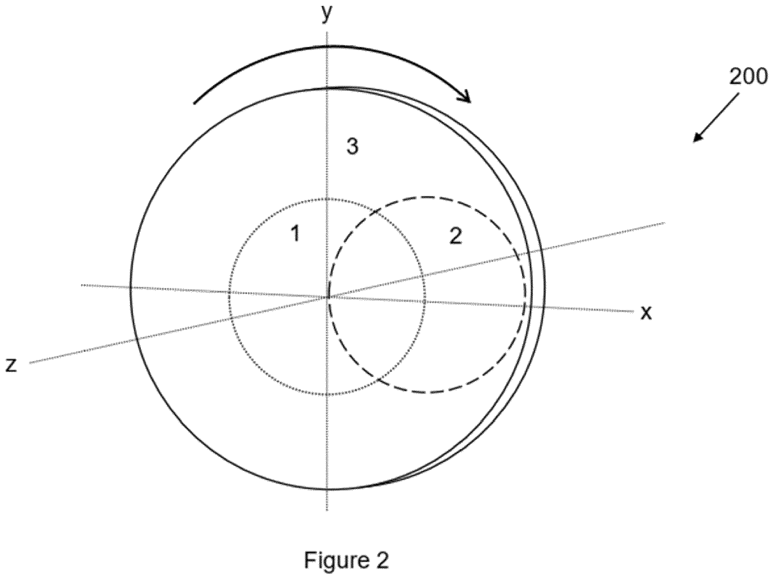

The optic 125 may be a freeform optic. An example for a freeform optic is shown in Figure 2. This optical surface is mounted within the system as an SUT 125 on rotational spindle 126. The position of the rotational spindle 126 and the SUT mounted thereon is controllable by the controller 200.

The controller 200 comprises any suitable controller including a processor and memory and operable including to output control signals to the SUT mount 126 and to optical metrology system including first and second mirror, and other moveable or adjustable components thereof.

Referring to the example of Figure 2, the optic/SUT 125, 3 is illustrated as having two superimposed sub-aperture footprints on the surface illustrating that the central sub-aperture labelled as 1 and 2. According to the specification the SUT 125 or optic 3 is mountable to a rotational spindle such that it can be radially shifted from a first position to a second position 2 using the degrees of freedom of the system. To successfully cover the SUT with sub-aperture footprints the SUT can be rotated about the central machining axis, which is the z-axis of rotation in Figure 2 notation and is labelled as z-axis in Figure 1.

In the example provided in Figure 1b, fourth order astigmatism is removed from the exit pupil and introduced into the system by means of two orthogonal cylindrical lenses, an aspherical lens if the dominant aberration is spherical aberration. The residual aberration is then introduced in the pupil plane, labelled as 1 in Figure 1.

Figure 2 illustrates two sub-aperture footprints 1, 2 and an exemplary freeform SUT 3. Shown is the rotation of the optic surface about the central machining axis, z-axis.

Figure 3 illustrates the arrangement of Figure 1 and further illustrates the degrees of freedom of the mechatronics for measurement of a freeform optical surface with a convex base shape. The mechanical movements are shown by arrows and axes.

Referring to Figure 3, the degrees of freedom of movement supported by the system 100 to fulfil the chief ray criterion for a convex surface are shown in Figure 3. The mechanical movements provided for the re-direction of the chief ray are:
- Tilt about the x and y axes for the tip-tilt mirror (component 115, 3 in Figure 3).
- Tilt of the relay mirror (component 120, 4 in Figure 3) about x and y axes.
- Lateral displacement of the relay mirror (component 120, 4 in Figure 3) along the x and y axes.
- Lateral displacement of the full metrology system, labelled as 6 in Figure 1, along the x-axis only, with respect to the SUT (component 125, 5 in Figure 3).
- Longitudinal displacement of the relay mirror (component 120, 4 in Figure 3) along the z-axis.
- Rotate the SUT about the z-axis, which is the central mechanical axis.

Custom mechanical movements required are:
- For non-rotationally-symmetric focusing elements, the elements are configured rotate about the z-axis. The system is configured to support rotation of the optical elements about the z-axis. In an exemplary arrangement, the optical elements may comprise a pair of cylindrical lenses.
- For a static nulling element, such as a phase plate, the element is configured to be rotated about the z-axis.

Figure 4 illustrates an optical system having an exit pupil 105, a mirror 115 and a surface under test 125. The system further comprises partial nulling, or focusing, elements 110. The mirror may be a tip/tilt mirror or a beam steering mirror. The mirror may be a reconfigurable mirror. A controller 200 is configured to control the positions of the mirror and the SUT, as described above.

Figure 4 further illustrates degrees of freedom of the mechatronics required for the measurement of a freeform optical surface with a base shape that departs from convex.

In an exemplary arrangement for a concave freeform optic measurement, the use of the relay mirror 120 may be omitted as in Figure 4. The exemplary arrangement illustrated instead provides for a repositioning of the tip-tilt mirror 115, as shown in Figure 4. The tip-tilt mirror 115 may be repositioned at the centre of curvature of the SUT. The mechanical movements required for concave optic measurement are:
- Tilt about the x and y axes for the tip-tilt mirror (component 3, 115 in Figure 4).
- Lateral displacement of the full metrology system, labelled as reference number 6 in Figure 4, along the x-axis only, with respect to the SUT (component 120, 4 in Figure 1 (b)).
- Rotate the SUT about the z-axis, which is the central mechanical axis.

Custom mechanical movements:
- For non-rotationally-symmetric focusing elements, the elements are configured to be rotated about the z-axis.
- For a static nulling element, such as a phase plate, the element is configured to be rotated about the z-axis.

The metrology system is configured to provide for re-construction of large-aperture optical surfaces such as a freeform optical surface or an asphere. The system is configured to support measurements of optical properties of the optical surface, including one or more of: phase map data, wavefront measurements, and wavefront error measurements. The SA measurements may comprise fringes or phase data, and the fringes or phase data for each SA is at least partially nulled.

The extent to which the interferograms can be resolved is dependent on the pixel pitch of the interferometer. The sampling criterion states that the absolute value of the phase difference between any two consecutive phase samples (i.e. pixels) is less than π: $W \left(x, y\right) < \frac{λ}{2 \left(Δx\right)}$, where Δx is the difference between two consecutive pixels [Nyquist].

In summary, the specification provides an optical metrology system 100 for measuring the wavefront error of large, non-standard optical surfaces.

In some embodiments, the system and methods of the specification further provide that interferograms from individual SAs are stitched together to reconstruct the full surface. Non-standard optics may have regions that are very steep, meaning that they are challenging to measure. The partial nulling method described herein, based on the configuration of the SUT and the metrology system support such measurements.

In an exemplary arrangement of the specification, advantageously the SUT is mounted on a rotational spindle, which is mechanically separate from the metrology system. The metrology system includes a reconfigurable relay mirror and a reconfigurable tip/tilt mirror, the relay mirror having six degrees of freedom motion. These reconfigurable mirrors (relay and tip/tilt) are positioned such that the fringes from the particular SA under consideration are partially nulled. Thus, the manufacturing and measuring processes are completely decoupled, removing the metrology bias that exists in other systems, such as confocal ones.

Variable optical elements are used to further null the fringes at each SA position, maximising the available measurement range for that particular measurement. A digital twin of the full system is used to plan the SA lattice layout using a custom software routine, model the nulling required and achievable at each location, and simulate the machine output at that location. This lattice design process can be iterated upon to achieve the accuracy required. Planning using the digital twin is done prior to taking any actual data. Once the measurements have been taken, stitching of SAs is performed using software, to recreate the SUT over its full diameter. The software is optimised for speed to ensure that the computation time required to recreate a large diameter SUT from many SA measurements does not become impractical. The system is compact enough to be integrated into a single point diamond turning (SPDT) polishing machine, making inline measurements possible.

Figure 4 illustrates an optical system having an exit pupil 105, a mirror 115 and a surface under test 125. The system further comprises partial nulling elements 110. The mirror may be a tip/tilt mirror or a beam steering mirror. The mirror may be a reconfigurable mirror. A controller 200 is configured to control the positions of the mirror and the SUT, as described above.

Figure 4 further illustrates degrees of freedom of the mechatronics required for the measurement of a freeform optical surface with a base shape that departs from convex.

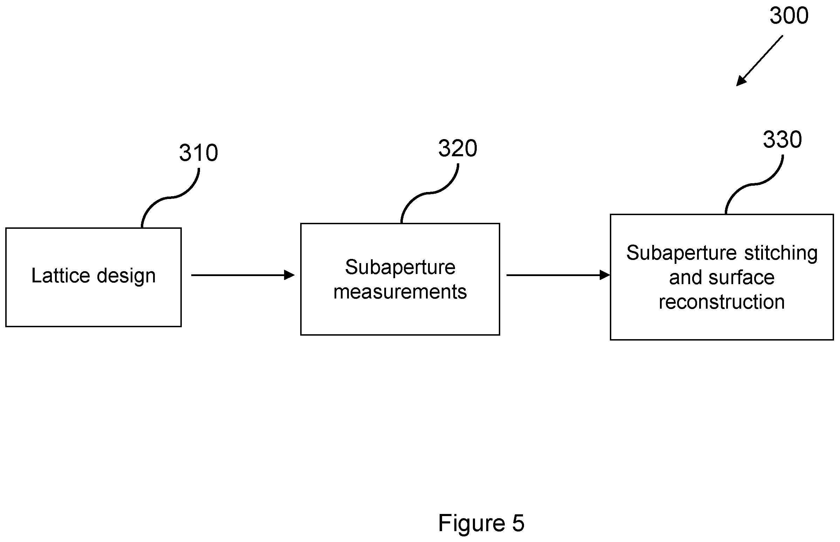

Modules 300 of, and related methods of operation of metrology system 100 are shown in Figure 5. The methods comprise the following:
1. Lattice design.
2. Subaperture measurements.
3. Subaperture stitching and surface reconstruction.

Each of these three steps can be considered to be a module with dependent inputs and outputs for sequential execution. The aim is to have the reconstructed surface converge to the target SUT with repeated machining/polishing cycles. After these three steps, the reconstructed surface is compared to the target surface. If they match to within a desired tolerance, the machining/polishing process is deemed complete. If they do not, further polishing of the SUT is carried out to improve convergence.

The modules 300 may be provided integrated with or coupled to the controller 200. The modules may provide for processing of one or more of measurement data, system parameters and other inputs as noted above. The modules may be configured to provide

The module may be coupled to one or more processors and memory units comprising instructions executable to carry out the steps of the methods of the specification and to control the operation of the metrology system 100 and the components thereof.

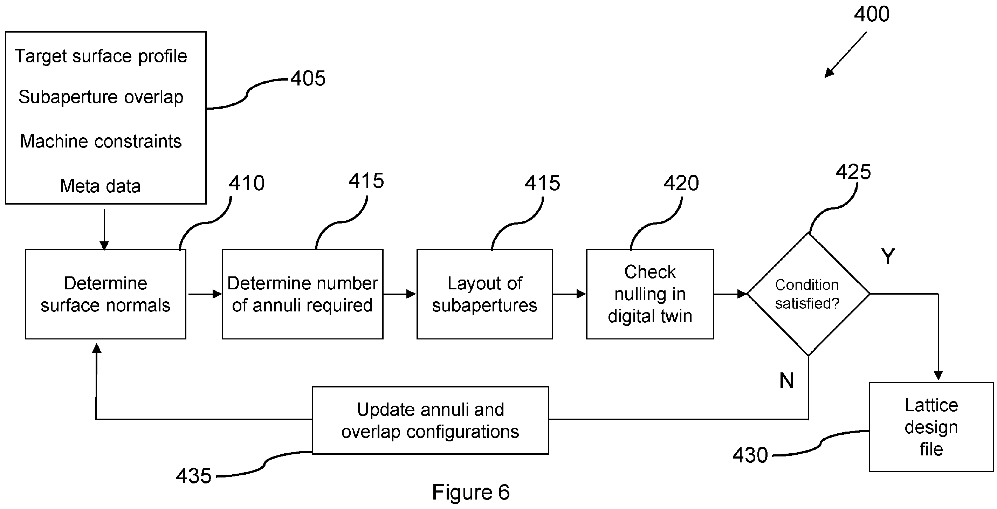

An exemplary custom lattice design routine is described with reference to Figure 6. This routine is used to optimise the layout of the subapertures to fully cover any SUT, with sufficient percentage overlap between adjacent subapertures, SAs, to minimise errors, while reducing the time required to measure the full SUT.

Reference is made to Figure 6.

Inputs 405 to the lattice design stage 310 include one or more of the following:
1. A high-resolution target surface or point cloud of the target surface. The high-resolution target surface or point cloud of the target surface may be received/ exported from a ray tracing software application.
2. The desired or selected percentage overlap between adjacent subapertures. More overlap gives the stitching algorithm more information but takes longer to process the extra information. There is an optimum value to reduce noise to a desired level with the smallest amount of overlap possible.
3. A priori knowledge of hardware inaccuracies to ensure that results are within meaningful bounds.
4. Meta data such as SUT and subaperture sizes, camera resolution and pixel size.

In a further exemplary arrangement of the specification there may be provided a system for creation of a digital twin 500 of the system 100. It will be appreciated that the digital twin may be used in combination with arrangements of the previously described embodiments.

In this exemplary arrangement integral to the lattice design step is the provision and creation of a digital twin of the system. The digital twin may be provided in a Zemax OpticStudio Application Programming Interface (API). The digital twin 500 allows for testing of the nulling capabilities (reference is made also to the exemplary arrangement of Figure 6 - steps 420, 425) of the metrology unit at each subaperture position prior to performing any physical measurements. In the digital twin 500, interferograms are simulated for the output of each subaperture. Image processing is used to analyse the resulting fringes, to determine whether or not the configuration is sufficient/meets requirements for nulling. If not, the lattice design algorithm goes through one or more further iterations where the lattice configuration parameters are adjusted. The process repeats until a satisfactory solution is found.

Outputs from the lattice design stage 310 include:
1. A lattice design file containing the position in 3D space of the centre of each subaperture. This data feeds into the stitching algorithm as it provides the initial configuration (position) of each subaperture in a global reference frame located at the SUT. It is also used to determine the measurement path of the machine.
2. The x and y tilts at these central coordinates.
3. The unit normal vectors at these central coordinates.

Once the optimum lattice design is fixed, the measurement trajectory of the metrology unit 100 (also referred to as the metrology system 100) is determined using a shortest path algorithm. The subaperture measurements 320 are acquired according to the measurement trajectory determined. Once a complete set of subapertures measurements has been gathered, the interferograms are fed to the stitching algorithm to reconstruct the full SUT surface profile. The departure/or not of the reconstructed surface from the target SUT at this stage is used to determine if further machining/polishing cycles are required.

The stitching algorithm consists of finding a configuration for each subaperture that minimises the differences between subapertures in the regions of overlap. Subapertures are stitched simultaneously and the constraints on allowed configurations are determined by the allowed motion and tolerances of the machine.

A lattice configuration (311) consists of a set of affine transforms for each subaperture (three translation matrices and three rotation matrices) that positions that subaperture in 3D space whilst minimising the differences in the overlap regions in a least-squares sense. With excellent machine tolerances and precision positioning ability, the best configuration for each subaperture should ideally be only a small perturbation to the designed configuration as determined at the lattice design stage.

Reference is made to Figure 6 which provides inputs 405 including target surface profile, subaperture overlap, machine constraints and meta data. At 410 surface normal are determined. At 415 the number of annuli required are determined. At 415 a layout of subapertures is provided. At 420 a check of nulling in the digital twin is provided. At 425 a determination is made to whether the condition is satisfied. In an exemplary arrangement Image processing is used to analyse the resulting fringes, to determine whether or not the configuration is sufficient/meets requirements for nulling. If not, the lattice design algorithm goes through one or more further iterations where the lattice configuration parameters are adjusted at step 435. The process repeats until a satisfactory solution is found. When the condition is positively satisfied at 235 - then at 430 the lattice design file is generated.

The ideal configuration (311) is arrived at using an iterative process. In the present implementation of this stitching algorithm, the loop runs typically < 10 times and the solution affine matrices are stored at each iteration. The 'best' affine is chosen at the end of the process and applied to the subaperture measurement points. The corrected subaperture data points are then stitched, taking into account the number of overlaps at each pixel, to reconstruct the final surface. To ease the iterative stitching process smoothly towards a good solution with minimal overshoots, a loop gain is applied when updating the affine matrices between iterations.

The arrangements of the specification further address issues relating to processing load that may arise in the event that the camera used to acquire subaperture measurements has high resolution, and that further may arise at processing including stitching. Stitching algorithm may result in space and time bottlenecks associated with managing and processing very large data sets. (A camera with 1000 x 1000 pixels results in 1E6 data points per subaperture.)

To provide a solution that addresses these problems the following are provided.
1. Use of software for example open source packages that are optimised for manipulation of large arrays; the Python NumPy package.
2. The custom stitching code of the arrangement of the specification includes the option to process a reduced (randomly selected) number of pixels in the full-resolution phase maps. To optimise operation the system is configured to provide for coarser sampling while maintaining a good resolution The level of sampling (fine/coarse) can be tailored to the particular SUT. After the optimum configuration for each subaperture has been found by least squares minimisation of the differences between sub apertures in the overlap regions, the full resolution maps are used to build the composite surface. Variable sampling may be used to reduce computation time. Further advantageously it does not result in a lower resolution stitched surface than that expected from the camera properties.
3. The arrangements of the specification advantageously reduce computation time by making use of parallel processing techniques so that some stitching tasks which can be completed in any sequence are run in parallel rather than sequentially. The order in which tasks are run is flexible.

An example arrangement of the specification and related advantages is set out below and provided to assist in understanding the invention.

The specification provides a metrology unit capable of reconstructing large-aperture freeform optical surface shapes from many overlapping, partially-nulled subaperture phase maps. Partial nulling is achieved through a novel configuration of the SUT and the metrology machine itself. The SUT is mounted on a rotational spindle, which is mechanically separate from the metrology system we describe. The metrology system includes a reconfigurable relay mirror and a reconfigurable tip/tilt mirror, the relay mirror having six degrees of freedom motion. These reconfigurable mirrors (relay and tip/tilt) are positioned such that the fringes from the particular SA under consideration are partially nulled. Thus, the manufacturing and measuring processes are completely decoupled, removing any metrology bias.

The metrology unit is configured to perform all subaperture measurements inline between machining steps, removing the need to take the SUT out of the rotational spindle (chuck) in order to perform measurements. This allows for decoupling of the metrology bias that may exist in other inline metrology systems, such as confocal ones.

A custom lattice design routine may be used to optimise the layout of the subapertures to fully cover any SUT while minimising the required measurement time. This is achieved by reducing the number of subapertures required to cover the SUT and by efficiently arranging the subaperture overlay pattern.

The lattice design routine uses the following inputs to create the optimised lattice design which will feed to the measurement trajectory and the stitching algorithm:
a high-resolution target surface or point cloud of the target surface exported from commercial optical design packages
metrology unit constraints, which are very much machine dependent, but will be fixed and known for any particular machine.
metadata relating to the desired resolution, surface dimension properties, and maximum subaperture dimensions.

The metric for a successful lattice design is that it meets the required fringe resolution criteria for every subaperture.

If the resolution criteria are not fulfilled, the lattice configuration (311) requirements (inter-annulus and adjacent overlap percentages) are updated. The design then iteratively repeats the previous steps until a suitable solution is achieved.

The lattice configuration may be configured for input to commercial ray-tracing software via an Application Programming Interface (API) to create a digital twin of the physical measurement system. Using this digital twin, all interferograms are simulated for the output of each subaperture. Fringe resolution analysis via image processing is used to determine if the configuration is sufficient for nulling.

The ability to perform measurements inline drives the compact and reconfigurable design of the invention so that it can be integrated into an industrial machining or polishing environment.

The ability to perform measurements inline without touching the SUT as it sits in the chuck means that the method is completely contactless.

In the example system machine mechanical bias is removed from the data collection process by using a tip/tilt mirror and relay mirror in partnership to shift the sub aperture measurement position on the SUT, which is mounted on a rotational spindle.

Partial nulling of individual sub apertures is achieved through a combination of static and variable optical elements and mechanical stages having six degrees of freedom motion.

In one example partial nulling is achieved using two cylindrical lenses operating as a pair. Partial nulling may be additionally achieved with a static phase plate that can rotate about the optical axis.

A single surface shape may be provided by using a single static custom phase plate to achieve partial nulling.

The arrangement allows for partial nulling to be achieved with a reconfigurable spatial light modulator (SLM), used in double pass, and placed in a plane conjugate to the SUT.

The arrangements may be configured to be extended to production of one-off surfaces by using a reconfigurable SLM to achieve partial nulling.

The system is configured to allow measurement of freeform optical surfaces with convex base shape.

The example arrangement also involves configuration of the system to allow measurement of freeform optical surfaces with concave base shape.

Use of the metrology unit is extended beyond measurement of freeform optics to measurement of any challenging (steep surface) asphere.

Advantageously the arrangements are robust to obscurations in any subaperture that may be created by an optical element in the beam path. This robustness is built in at the lattice design stage and in the implementation of the stitching algorithm.

Advantageously the lattice design routine is used to find the orientation of the metrology unit with respect to the SUT to null tip and tilt for each subaperture. As a first pass, the best fit base sphere is used, but if the nulling criteria are not met, the target surface/point cloud is updated to the original surface design. This step results in the generation of surface normal vectors at every grid point on the target SUT. In particular, the surface normal at the centre of each SA is identified for positioning of the machine so that measurements are made at normal incidence to the SUT. In a further embodiment, a high-order order polynomial can be used if the best fit base sphere is found not suitable.

A custom lattice design can be created for any SUT given the target surface, machine parameters, subaperture overlap requirements and other meta-data.

The freedom of individual optical elements or groups of optical elements, suitably mounted in precision stages, to move with six degrees of freedom allows each subaperture to be measured at normal incidence.

The design allows for variable sampling of subaperture measurements in the stitching algorithm. For very high-resolution measurements, the time taken to stitch many subapertures may become impractical. Variable sampling allows the algorithm to run faster and find a quick solution. There is no loss in resolution in the measurements themselves. The sampling can be tailored to the desired accuracy required for the reconstructed surface.

The stitching algorithm may be optimised through use of parallel processing techniques to reduce data processing time.

Rather than auto detection of overlapping subapertures, which involves a lot of checking, a list of overlapping subaperture pairs is provided to the stitching algorithm. This reduces complexity as the list does not change from run to run.

To allow for smooth convergence of the stitching algorithm, a loop gain is introduced when calculating the new configuration at each iteration of the loop. This has the effect of reducing the number of iterations required to achieve convergence as there is no overshooting.

## Claims

1. A partially nulling optical metrology system (100) for the measurement of large aperture and freeform optical surfaces, wherein the metrology system comprises an interferometer comprising:
a first mirror (115) having a plurality of degrees of freedom of motion;
one or more optical elements comprising reconfigurable optical elements;
a controller;
the metrology system (100) configured to be optically coupled to an externally located surface under test, SUT (125), and to capture measurement data, comprising phase measurement data, from each of a plurality individual subapertures, SAs, across the area of the SUT, each SA having a surface area smaller than that of the SUT; and
the metrology system configured to provide partial nulling of each of the SA measurements across the SUT, based on controlled adjustment of one or more of: the metrology system and the elements thereof;
wherein a position of the metrology system relative to the SUT is adjustable such that measurements are made substantially normal to the SUT, the metrology system being coupled to a moveable mount and the controller operable to adjust the position of the metrology system;
wherein the reconfigurable optical elements are adjustable relative to the SUT;
wherein the first mirror is adjustable relative to the SUT; and
wherein the measurement data, comprising measurements relating to the plurality of individual subapertures, SAs, is stitched to describe the full surface of the SUT.

2. The system of claim 1, the first mirror comprising a beam steering mirror (115), wherein the beam steering mirror comprises a tip tilt mirror which is reconfigurable, and having two degrees of freedom of motion.

3. The system of claim 1, further comprising a second mirror (120), the second mirror comprising a relay mirror (120) wherein the relay mirror is reconfigurable, having six degrees of freedom of motion.

4. The system of any preceding claim, the first and second mirrors (115, 120) being adjustable relative to the SUT, and the plurality of SAs, across the SUT,
wherein the position of the first and second mirrors (120, 115) is controllable to provide a partial nulling of the individual sub-aperture measurements across the surface under test, SUT.

5. The system of any preceding claim, measurements being made substantially normal to the SUT, and the plurality of SAs, across the SUT.

6. The system of any preceding claim, configured to measure wavefront errors of the optical surface of the SUT, by measuring wavefront errors from each of a plurality of individual overlapping subapertures, SAs, of the SUT, each SA having a surface area smaller than that of the SUT, and wherein a reconstruction of the optical surface, is provided by the plurality of partially nulled overlapping subaperture measurements.

7. The system of any preceding claim, wherein the controller (200) is configured to control the position of one or more of the: metrology system (100), the first mirror (115), and the second mirror (120), to position an optical beam on the SUT, as required.

8. The system of claim 1, wherein the SUT is arranged according to one or more of the following:
(i) wherein a position of the SUT is adjustable, the SUT being coupled to a moveable mount, and configured for movement independently of the metrology system such that any mechanical bias of the system is removed from the data collection process; and
(ii) wherein the controller (200) is configured to control the position of the SUT, to allow selection of one or more individual SAs, such that the optical beam is positioned on an SA of the SUT;
(iii) wherein the SUT (125) is mountable to a rotational spindle (126) and wherein the controller (200) is configured to control the position of the SUT, to allow selection of one or more individual SAs, such that the optical beam is positioned on an SA of the SUT.

9. The system of any preceding claim, wherein the phase measurement data from each of the subapertures, SAs, comprises phase maps.

10. The system according to any preceding claim,
wherein the metrology system is configured to be integrated into an industrial machining or polishing environment; and
wherein the metrology system is configured to capture measurement data according to one or more of the following
(i) wherein measurement data comprising subaperture measurements of the SUT is captured in an inline process; and
(ii) wherein measurement data comprising subaperture measurements of the SUT is captured between machining steps during the process of manufacture of the SUT.

11. The system of claim 1, further comprising a lattice design module (310) arranged according to one or more of the following:
(i) wherein the lattice design module is configured to create an optimised lattice configuration (311) wherein the lattice configuration (311) comprises one or more of a definition of a measurement trajectory for a SUT, and a stitching algorithm for stitching of SAs of an SUT;
(ii) wherein the lattice design module (310) is configured to use one or more the following inputs:
(a) a high-resolution target surface or point cloud of the target surface, and further
wherein the target surface may be obtained from an optical design software;
(b) metrology unit constraints, comprising data that is fixed and known for any particular machine;
(c) metadata relating to the desired outputs including desired resolution, surface dimension properties, and maximum subaperture dimensions.

12. The system of any preceding claim wherein a predefined minimum threshold requirement for creation of a lattice design (311) is defined based on a required fringe resolution criteria for every subaperture, SA and wherein in the event that the required fringe resolution criteria threshold is not met, the lattice configuration requirements are updated, and wherein the lattice configuration requirements may comprise one or more of (i) inter-annulus and (ii) adjacent overlap percentages.

13. The system of any preceding claim, wherein the optical elements are configured to provide partial nulling of individual sub apertures, the optical elements comprising one or more of the following:
(i) at least two cylindrical lenses, wherein the at least two cylindrical lenses are configured to be adjustable and for use in conjunction with one another, and configurable to provide partial nulling of individual subapertures;
(ii) a static phase plate, wherein the static phase plate is configured to rotate about an optical axis to provide partial nulling of individual subapertures.

14. A method for the capturing measurement data of the optical surface of a surface under test, SUT, in a partially nulling metrology system as claimed in any preceding claim, the metrology system comprising an interferometer, the method comprising:
optically coupling the metrology system to a SUT, wherein the SUT is located externally of the metrology system;
capturing measurement data comprising phase measurement data from each of a plurality individual subapertures, SAs, across the area of the SUT, each SA having a surface area smaller than that of the SUT;
stitching of the measurement data comprising measurements relating to the plurality of individual subapertures, SAs, to describe the full surface of the SUT;
controlling the metrology system and the elements thereof to provide partial nulling of each of the SA measurements across the SUT, wherein said partial nulling is provided based on one or more of the following:
adjusting the metrology system relative to SUT, wherein the metrology system is mounted to a movable mount for positioning relative to the SUT;
adjustment of one or more optical elements of the metrology system relative to the SUT;
adjustment of the one or more mirrors of the metrology system relative to the SUT;
the method further comprising:
adjusting a position of the SUT relative to metrology system as required, the SUT being mountable to a movable mount.

15. The method of claim 14, wherein the method further comprises:
controlling the optical metrology system and the measurement trajectory for the SUT based on operating a lattice design module to create an optimised lattice configuration and to define the measurement trajectory and stitching algorithm for stitching of the SAs in an iterative process.

## Patentansprüche

1. Ein optisches Metrologiesystem (100) mit teilweiser Nullung für die Messung von optischen Großapertur- und Freiformoberflächen, wobei das Metrologiesystem ein Interferometer beinhaltet, das Folgendes beinhaltet:
einen ersten Spiegel (115) mit einer Vielzahl von Bewegungsfreiheitsgraden;
ein oder mehrere optische Elemente, die rekonfigurierbare optische Elemente beinhalten;
eine Steuereinrichtung;
wobei das Metrologiesystem (100) konfiguriert ist, um optisch mit einer sich extern befindlichen zu prüfenden Oberfläche, SUT (Surface Under Test) (125), gekoppelt zu werden und um Messdaten, die Phasenmessdaten beinhalten, von jeder einer Vielzahl von einzelnen Teilaperturen, SAs (Subapertures), über den Bereich der SUT hinweg zu erfassen, wobei jede SA einen Oberflächenbereich aufweist, der kleiner als der der SUT ist; und
wobei das Metrologiesystem konfiguriert ist, um eine teilweise Nullung jeder der SA-Messungen, über die SUT hinweg, bereitzustellen, basierend auf einer gesteuerten Einstellung von einem oder mehreren von: dem Metrologiesystem und den Elementen davon;
wobei eine Position des Metrologiesystems relativ zu der SUT einstellbar ist, sodass Messungen im Wesentlichen normal zu der SUT vorgenommen werden, wobei das Metrologiesystem mit einer beweglichen Halterung gekoppelt ist und die Steuereinrichtung betriebsfähig ist, um die Position des Metrologiesystems einzustellen;
wobei die rekonfigurierbaren optischen Elemente relativ zu der SUT einstellbar sind;
wobei der erste Spiegel relativ zu der SUT einstellbar ist; und
wobei die Messdaten, die die Vielzahl von einzelne Teilaperturen, SAs, betreffende Messungen beinhalten, aneinandergereiht werden (Stitching), um die gesamte Oberfläche der SUT zu beschreiben.

2. System gemäß Anspruch 1, wobei der erste Spiegel einen Strahllenkspiegel (115) beinhaltet, wobei der Strahllenkspiegel einen Tip-Tilt-Spiegel beinhaltet, der rekonfigurierbar ist und zwei Bewegungsfreiheitsgrade aufweist.

3. System gemäß Anspruch 1, das ferner einen zweiten Spiegel (120) beinhaltet, wobei der zweite Spiegel einen Relaisspiegel (120) beinhaltet, wobei der Relaisspiegel rekonfigurierbar ist und sechs Bewegungsfreiheitsgrade aufweist.

4. System gemäß einem der vorhergehenden Ansprüche, wobei der erste und der zweite Spiegel (115, 120) relativ zu der SUT und der Vielzahl von SAs, über die SUT hinweg, einstellbar sind,
wobei die Position des ersten und des zweiten Spiegels (120, 115) steuerbar ist, um eine teilweise Nullung der einzelnen Teilaperturmessungen über die zu prüfende Oberfläche, SUT, hinweg bereitzustellen.

5. System gemäß einem der vorhergehenden Ansprüche, wobei Messungen im Wesentlichen normal zu der SUT und der Vielzahl von SAs, über die SUT hinweg, vorgenommen werden.

6. System gemäß einem der vorhergehenden Ansprüche, das konfiguriert ist, um Wellenfrontfehler der optischen Oberfläche der SUT zu messen, indem Wellenfrontfehler von jeder einer Vielzahl von einzelnen überlappenden Teilaperturen, SAs, der SUT gemessen werden, wobei jede SA einen Oberflächenbereich aufweist, der kleiner als der der SUT ist, und wobei eine Rekonstruktion der optischen Oberfläche durch die Vielzahl von teilweise genullten überlappenden Teilaperturmessungen bereitgestellt wird.

7. System gemäß einem der vorhergehenden Ansprüche, wobei die Steuereinrichtung (200) konfiguriert ist, um die Position von einem oder mehreren von dem Metrologiesystem (100), dem ersten Spiegel (115) und dem zweiten Spiegel (120) zu steuern, um einen optischen Strahl auf der SUT nach Bedarf zu positionieren.

8. System gemäß Anspruch 1, wobei die SUT gemäß einem oder mehreren von Folgendem angeordnet ist:
(i) wobei eine Position der SUT einstellbar ist, wobei die SUT mit einer beweglichen Halterung gekoppelt ist und für eine Bewegung unabhängig von dem Metrologiesystem konfiguriert ist, sodass jegliche mechanische Verzerrung des Systems aus dem Datensammelprozess entfernt wird; und
(ii) wobei die Steuereinrichtung (200) konfiguriert ist, um die Position der SUT zu steuern, um eine Auswahl von einer oder mehreren einzelnen SAs zu ermöglichen, sodass der optische Strahl auf einer SA der SUT positioniert ist;
(iii) wobei die SUT (125) an einer Drehspindel (126) montierbar ist und wobei die Steuereinrichtung (200) konfiguriert ist, um die Position der SUT zu steuern, um eine Auswahl von einer oder mehreren einzelnen SAs zu ermöglichen, sodass der optische Strahl auf einer SA der SUT positioniert ist.

9. System gemäß einem der vorhergehenden Ansprüche, wobei die Phasenmessdaten von jeder der Teilaperturen, SAs, Phasenkarten beinhalten.

10. System gemäß einem der vorhergehenden Ansprüche,
wobei das Metrologiesystem konfiguriert ist, um in eine industrielle Bearbeitungs- oder Polierumgebung integriert zu werden; und
wobei das Metrologiesystem konfiguriert ist, um Messdaten gemäß einem oder mehreren von Folgendem zu erfassen:
(i) wobei Messdaten, die Teilaperturmessungen der SUT beinhalten, in einem Inline-Prozess erfasst werden; und
(ii) wobei Messdaten, die Teilaperturmessungen der SUT beinhalten, zwischen Bearbeitungsschritten während des Herstellungsprozesses der SUT erfasst werden.

11. System gemäß Anspruch 1, das ferner ein Gitterentwurfsmodul (310) beinhaltet, das gemäß einem oder mehreren von Folgendem angeordnet ist:
(i) wobei das Gitterentwurfsmodul konfiguriert ist, um eine optimierte Gitterkonfiguration (311) zu schaffen, wobei die Gitterkonfiguration (311) eines oder mehrere von einer Definition einer Messtrajektorie für eine SUT und einem Stitching-Algorithmus zum Stitching von SAs einer SUT beinhaltet;
(ii) wobei das Gitterentwurfsmodul (310) konfiguriert ist, um eine oder mehrere der folgenden Eingaben zu verwenden:
(a) eine hochauflösende Zieloberfläche oder Punktwolke der Zieloberfläche, und wobei ferner die Zieloberfläche von einer optischen Entwurfssoftware erhalten werden kann;
(b) Metrologieeinheitsbeschränkungen, die Daten beinhalten, die für eine bestimmte Maschine feststehend und bekannt sind;
(c) Metadaten, die die gewünschten Ausgaben betreffen, einschließlich gewünschter Auflösung, Oberflächenabmessungseigenschaften und maximaler Teilaperturabmessungen.

12. System gemäß einem der vorhergehenden Ansprüche, wobei eine vordefinierte Mindestschwellenanforderung zur Schaffung eines Gitterentwurfs (311) basierend auf einem erforderlichen Streifenauflösungskriterium für jede Teilapertur, SA, definiert ist und wobei in dem Fall, dass die erforderliche Schwelle des Streifenauflösungskriteriums nicht erfüllt wird, die Gitterkonfigurationsanforderungen aktualisiert werden und wobei die Anforderungen der Gitterkonfiguration eines oder mehrere von (i) Inter-Ringzonen- und (ii) benachbarten Überlappungsprozentsätzen beinhalten können.

13. System gemäß einem der vorhergehenden Ansprüche, wobei die optischen Elemente konfiguriert sind, um eine teilweise Nullung einzelner Teilaperturen bereitzustellen, wobei die optischen Elemente eines oder mehrere von Folgendem beinhalten:
(i) mindestens zwei Zylinderlinsen, wobei die mindestens zwei Zylinderlinsen konfiguriert sind, um einstellbar zu sein und um im Zusammenhang miteinander verwendet zu werden, und konfigurierbar sind, um eine teilweise Nullung einzelner Teilaperturen bereitzustellen;
(ii) eine statische Phasenplatte, wobei die statische Phasenplatte konfiguriert ist, um sich um eine optische Achse zu drehen, um eine teilweise Nullung einzelner Teilaperturen bereitzustellen.

14. Ein Verfahren zum Erfassen von Messdaten der optischen Oberfläche einer zu prüfenden Oberfläche, SUT, in einem Metrologiesystem mit teilweiser Nullung, wie in einem der vorhergehenden Ansprüche beansprucht, wobei das Metrologiesystem ein Interferometer beinhaltet, wobei das Verfahren Folgendes beinhaltet:
optisches Koppeln des Metrologiesystems mit einer SUT, wobei sich die SUT extern des Metrologiesystems befindet;
Erfassen von Messdaten, die Phasenmessdaten von jeder einer Vielzahl von einzelnen Teilaperturen, SAs, über den Bereich der SUT hinweg beinhalten, wobei jede SA einen Oberflächenbereich aufweist, der kleiner als der der SUT ist;
Stitching der Messdaten, die die Vielzahl von einzelne Teilaperturen, SAs, betreffende Messungen beinhalten, um die gesamte Oberfläche der SUT zu beschreiben;
Steuern des Metrologiesystems und der Elemente davon, um eine teilweise Nullung jeder der SA-Messungen, über die SUT hinweg, bereitzustellen, wobei die teilweise Nullung basierend auf einem oder mehreren von Folgendem bereitgestellt wird:
Einstellen des Metrologiesystems relativ zu der SUT, wobei das Metrologiesystem an einer beweglichen Halterung zum Positionieren relativ zu der SUT montiert ist;
Einstellen von einem oder mehreren optischen Elementen des Metrologiesystems relativ zu der SUT;
Einstellen des einen oder der mehreren Spiegel des Metrologiesystems relativ zu der SUT;
wobei das Verfahren ferner Folgendes beinhaltet:
Einstellen einer Position der SUT relativ zu dem Metrologiesystem nach Bedarf, wobei die SUT an einer beweglichen Halterung montierbar ist.

15. Verfahren gemäß Anspruch 14, wobei das Verfahren ferner Folgendes beinhaltet:
Steuern des optischen Metrologiesystems und der Messtrajektorie für die SUT basierend auf dem Betreiben eines Gitterentwurfsmoduls, um eine optimierte Gitterkonfiguration zu schaffen und die Messtrajektorie und den Stitching-Algorithmus zum Stitching der SAs in einem iterativen Prozess zu definieren.

## Revendications

1. Un système de métrologie optique à annulation partielle (100) pour la mesure de surfaces optiques à grande ouverture et à forme libre, où le système de métrologie comprend un interféromètre comprenant :
un premier miroir (115) ayant une pluralité de degrés de liberté de mouvement ;
un ou plusieurs éléments optiques comprenant des éléments optiques reconfigurables ;
un dispositif de contrôle ;
le système de métrologie (100) étant configuré pour être couplé optiquement à une surface sous test, SUT (125), située à l'extérieur et pour capturer des données de mesure, comprenant des données de mesure de phase, provenant de chaque sous-ouverture d'une pluralité de sous-ouvertures, SA, individuelles sur l'aire de la SUT, chaque SA ayant une aire de surface plus petite que celle de la SUT ; et
le système de métrologie étant configuré pour fournir une annulation partielle de chacune des mesures de SA sur la SUT, sur la base d'un ajustement contrôlé d'un ou de plusieurs éléments parmi : le système de métrologie et les éléments de celui-ci ;
où une position du système de métrologie relativement à la SUT est ajustable de telle sorte que des mesures sont effectuées substantiellement perpendiculairement à la SUT, le système de métrologie étant couplé à un support mobile et le dispositif de contrôle étant opérationnel pour ajuster la position du système de métrologie ;
où les éléments optiques reconfigurables sont ajustables relativement à la SUT ;
où le premier miroir est ajustable relativement à la SUT ; et
où les données de mesure, comprenant des mesures relatives à la pluralité de sous-ouvertures, SA, individuelles sont assemblées pour décrire toute la surface de la SUT.

2. Le système de la revendication 1, le premier miroir comprenant un miroir d'orientation de faisceau (115), où le miroir d'orientation de faisceau comprend un miroir d'inclinaison et de basculement qui est reconfigurable, et ayant deux degrés de liberté de mouvement.

3. Le système de la revendication 1, comprenant en outre un deuxième miroir (120), le deuxième miroir comprenant un miroir relais (120) où le miroir relais est reconfigurable, ayant six degrés de liberté de mouvement.

4. Le système de n'importe quelle revendication précédente, les premier et deuxième miroirs (115, 120) étant ajustables relativement à la SUT, et la pluralité de SA, sur la SUT,
où la position des premier et deuxième miroirs (120, 115) peut être contrôlée pour fournir une annulation partielle des mesures de sous-ouvertures individuelles sur la surface sous test, SUT.

5. Le système de n'importe quelle revendication précédente, des mesures étant effectuées substantiellement perpendiculairement à la SUT, et la pluralité de SA, sur la SUT.

6. Le système de n'importe quelle revendication précédente, configuré pour mesurer des erreurs de front d'onde de la surface optique de la SUT, en mesurant des erreurs de front d'onde provenant de chaque sous-ouverture d'une pluralité de sous-ouvertures, SA, en chevauchement individuelles de la SUT, chaque SA ayant une aire de surface plus petite que celle de la SUT, et où une reconstruction de la surface optique, est fournie par la pluralité de mesures de sous-ouvertures en chevauchement partiellement annulées.

7. Le système de n'importe quelle revendication précédente, où le dispositif de contrôle (200) est configuré pour contrôler la position d'un ou de plusieurs éléments parmi : le système de métrologie (100), le premier miroir (115), et le deuxième miroir (120), pour positionner un faisceau optique sur la SUT, comme requis.

8. Le système de la revendication 1, où la SUT est agencée selon un ou plusieurs des éléments suivants :
(i) où une position de la SUT est ajustable, la SUT étant couplée à un support mobile, et configurée pour se déplacer indépendamment du système de métrologie de telle sorte que tout biais mécanique du système est retiré du processus de collecte de données ; et
(ii) où le dispositif de contrôle (200) est configuré pour contrôler la position de la SUT, pour permettre la sélection d'une ou de plusieurs SA individuelles, de telle sorte que le faisceau optique est positionné sur une SA de la SUT ;
(iii) où la SUT (125) peut être montée sur une broche rotative (126) et où le dispositif de contrôle (200) est configuré pour contrôler la position de la SUT, pour permettre la sélection d'une ou de plusieurs SA individuelles, de telle sorte que le faisceau optique est positionné sur une SA de la SUT.

9. Le système de n'importe quelle revendication précédente, où les données de mesure de phase provenant de chacune des sous-ouvertures, SA, comprennent des cartes de phase.

10. Le système selon n'importe quelle revendication précédente,
où le système de métrologie est configuré pour être intégré dans un environnement d'usinage ou de polissage industriel ; et
où le système de métrologie est configuré pour capturer des données de mesure selon un ou plusieurs des éléments suivants
(i) où des données de mesure comprenant des mesures de sous-ouvertures de la SUT sont capturées dans un processus en ligne ; et
(ii) où des données de mesure comprenant des mesures de sous-ouvertures de la SUT sont capturées entre des étapes d'usinage pendant le processus de fabrication de la SUT.

11. Le système de la revendication 1, comprenant en outre un module de conception de réseau (310) agencé selon un ou plusieurs des éléments suivants :
(i) où le module de conception de réseau est configuré pour créer une configuration de réseau (311) optimisée où la configuration de réseau (311) comprend un ou plusieurs éléments parmi une définition d'une trajectoire de mesure pour une SUT, et un algorithme d'assemblage pour l'assemblage de SA d'une SUT ;
(ii) où le module de conception de réseau (310) est configuré pour utiliser une ou plusieurs des entrées suivantes :
(a) une surface cible haute résolution ou un nuage de points de la surface cible, et en outre où la surface cible peut être obtenue à partir d'un logiciel de conception optique ;
(b) des contraintes d'unité de métrologie, comprenant des données qui sont fixes et connues pour n'importe quelle machine particulière ;
(c) des métadonnées relatives aux sorties souhaitées incluant une résolution souhaitée, des propriétés de dimension de surface, et des dimensions de sous-ouvertures maximales.

12. Le système de n'importe quelle revendication précédente où un seuil minimal requis prédéfini pour la création d'une conception de réseau (311) est défini sur la base d'un critère de résolution de frange requis pour chaque sous-ouverture, SA, et où dans le cas où le seuil de critère de résolution de frange requis n'est pas satisfait, les configurations de réseau requises sont mises à jour, et où les configurations de réseau requises peuvent comprendre un ou plusieurs éléments parmi des pourcentages de chevauchement (i) inter-anneaux et (ii) adjacent.

13. Le système de n'importe quelle revendication précédente, où les éléments optiques sont configurés pour fournir une annulation partielle de sous-ouvertures individuelles, les éléments optiques comprenant un ou plusieurs des éléments suivants :
(i) au moins deux lentilles cylindriques, où les au moins deux lentilles cylindriques sont configurées pour être ajustables et pour une utilisation conjointement l'une avec l'autre, et configurables pour fournir une annulation partielle de sous-ouvertures individuelles ;
(ii) une plaque de phase statique, où la plaque de phase statique est configurée pour tourner autour d'un axe optique afin de fournir une annulation partielle de sous-ouvertures individuelles.

14. Un procédé pour la capture de données de mesure de la surface optique d'une surface sous test, SUT, dans un système de métrologie à annulation partielle tel que revendiqué dans n'importe quelle revendication précédente, le système de métrologie comprenant un interféromètre, le procédé comprenant :
le couplage optique du système de métrologie à une SUT, où la SUT est située à l'extérieur du système de métrologie ;
la capture de données de mesure comprenant des données de mesure de phase provenant de chaque sous-ouverture d'une pluralité de sous-ouvertures, SA, individuelles sur l'aire de la SUT, chaque SA ayant une aire de surface plus petite que celle de la SUT ;
l'assemblage des données de mesure comprenant des mesures relatives à la pluralité de sous-ouvertures, SA, individuelles pour décrire toute la surface de la SUT ;
le contrôle du système de métrologie et des éléments de celui-ci pour fournir une annulation partielle de chacune des mesures de SA sur la SUT, où ladite annulation partielle est fournie sur la base d'un ou de plusieurs éléments parmi ceux qui suivent :
l'ajustement du système de métrologie relativement à la SUT, où le système de métrologie est monté sur un support mobile pour un positionnement relativement à la SUT ;
l'ajustement d'un ou de plusieurs éléments optiques du système de métrologie relativement à la SUT ;
l'ajustement des un ou plusieurs miroirs du système de métrologie relativement à la SUT ;
le procédé comprenant en outre :
l'ajustement d'une position de la SUT relativement au système de métrologie comme requis, la SUT pouvant être montée sur un support mobile.

15. Le procédé de la revendication 14, où le procédé comprend en outre :
le contrôle du système de métrologie optique et de la trajectoire de mesure pour la SUT sur la base de l'exploitation d'un module de conception de réseau pour créer une configuration de réseau optimisée et pour définir la trajectoire de mesure et l'algorithme d'assemblage pour l'assemblage des SA dans un processus itératif.
